# EUROPÄISCHE PATENTSCHRIFT

(11) **EP 4 168 759 B1**
(45) Veröffentlichungstag und Bekanntmachung des Hinweises auf die Patenterteilung: **14.08.2024**
(21) Anmeldenummer: 21733791.4
(22) Anmeldetag: 16.06.2021
(51) Int. Cl.: G01F 23/296, G01N 9/00, G01N 9/32, G01N 11/16

(54) **SYMMETRIERUNG EINES VIBRONISCHEN SENSORS**
SYMMETRIZATION OF A VIBRONIC SENSOR
SYMETRISATION D'UN CAPTEUR VIBRONIQUE

(30) Priorität: 19.06.2020 DE 102020116299
(43) Veröffentlichungstag der Anmeldung: 26.04.2023
(73) Patentinhaber: Endress+Hauser SE+Co. KG, 79689 Maulburg (DE)
(72) Erfinder: BRENGARTNER, Tobias, 79312 Emmendingen (DE); BECHTEL, Gerd, 79585 Steinen (DE)
(74) Vertreter: Koslowski, Christine Adelheid
(86) Internationale Anmeldenummer: PCT/EP2021/066265
(87) Internationale Veröffentlichungsnummer: WO 2021/255105

(56) Entgegenhaltungen:
- WO-A2-2011/085872
- CH-A- 543 195
- DE-A1- 102004 011 377
- DE-A1- 102004 018 506
- DE-A1- 102016 112 743
- DE-A1- 102018 127 526

## Beschreibung

Die vorliegende Erfindung betrifft ein Verfahren zur Symmetrierung von einem ersten und einem zweiten Schwingelement einer Sensoreinheit in Form einer Schwinggabel, welche Sensoreinheit Teil eines vibronischen Sensors ist. Das Medium befindet sich in einem Behältnis, beispielsweise in einem Behälter oder in einer Rohrleitung. Ein Verfahren zur Symmetrierung einer Schwinggabel offenbart die DE 10 2004 018 506 A1.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit, zu mechanischen Schwingungen angeregt, welche wiederum beispielsweise ein piezoelektrischer Antrieb oder ein elektromagnetischer Antrieb sein kann. Entsprechende Feldgeräte werden von der Anmelderin in großer Vielfalt hergestellt und beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein. Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden, wie beispielsweise in den Dokumenten DE102006034105A1, DE102007013557A1, DE102005015547A1, DE102009026685A1, DE102009028022A1, DE102010030982A1 oder DE00102010030982A1 beschrieben.

Sowohl das Anregesignal als auch das Empfangssignal sind charakterisiert durch ihre Frequenz ω, Amplitude A und/oder Phase Φ. Entsprechend werden Änderungen in diesen Größen üblicherweise zur Bestimmung der jeweiligen Prozessgröße herangezogen. Bei der Prozessgröße kann es sich beispielsweise um einen Füllstand, einen vorgegebenen Füllstand, oder auch um die Dichte oder die Viskosität des Mediums, sowie um den Durchfluss handeln. Bei einem vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also anhand einer Frequenzverschiebung, unterschieden.

Die Dichte und/oder Viskosität wiederum lassen sich mit einem derartigen Messgerät nur ermitteln, wenn die schwingfähige Einheit vollständig vom Medium bedeckt ist. Im Zusammenhang mit der Bestimmung der Dichte und/oder Viskosität sind ebenfalls unterschiedliche Möglichkeiten aus dem Stand der Technik bekannt geworden, wie beispielswiese die in den Dokumenten DE10050299A1, DE102007043811A1, DE10057974A1, DE102006033819A1, DE102015102834A1 oder DE102016112743A1 offenbarten. So ist es z. B. aus der DE 10 2018 127 526 A1 bekannt, anhand mechanischer Schwingungen einer Schwinggabel und anhand von Ultraschallsignalen zwei unterschiedliche Prozessgrößen zu ermitteln,

Mit einem vibronischen Sensor lassen sich entsprechend mehrere Prozessgrößen bestimmen und für eine Charakterisierung des jeweiligen Prozesses heranziehen. In vielen Fällen werden für eine umfassende Prozessüberwachung und/oder -kontrolle allerdings weitere Informationen über den Prozess, insbesondere Kenntnis über weitere physikalische und/oder chemische Prozessgrößen und/oder-parameter benötigt. Dies kann beispielsweise durch die Integration weiterer Feldgeräte in den jeweiligen Prozess erreicht werden. Dann können die von den verschiedenen Messgeräten zur Verfügung gestellten Messwerte in einer den Geräten übergeordneten Einheit geeignet weiterverarbeitet werden.

Zur Erzielung einer hohen Messgenauigkeit für vibronische Sensoren in Form von Schwinggabeln ist es von großer Bedeutung, dass die beiden Schwingelemente gleichartig ausgestaltet sind. Bereits kleinste Abweichungen der Geometrien der beiden Schwingelemente voneinander führen zu einem geänderten Schwingungsverhalten, welches einen direkten Einfluss auf die jeweils zu bestimmende Prozessgröße hat oder eine Bestimmung der jeweiligen Prozessgröße sogar verhindern kann. Üblicherweise werden die Schwingelemente einer Schwinggabel während des Herstellungsprozesses einzeln zu mechanischen Schwingungen angeregt, während das jeweils andere Schwingelement blockiert wird. Anschließend wird das Schwingungsverhalten beider Schwingelemente verglichen und im Falle einer Abweichung werden die Schwingelemente einzeln bearbeitet, indem beispielsweise an geeigneten Positionen Material abgetragen wird. Dies ist ein vergleichsweise aufwendiger und ggf. iterativer und deshalb zeitintensiver Prozess.

Der DE 10 2004 011 377 A1 lässt sich entnehmen, dass die Resonanzfrequenz eines Einstabs über einen regelbaren Widerstand einstellbar ist.

In der DE 10 2004 018 506 A1 wird erkannt, ob eine Schwinggabel symmetrisch ist, indem die Gabel mit unterschiedlichen Frequenzen zu Schwingungen angeregt wird. Zeigt sich mehr als eine Resonanzfrequenz, so ist die Gabel nicht symmetrisch und muss nachbearbeitet werden.

Eine Stimmgabel dient in der CH 543 195 A als Teil eines elektromechanischen Bandfilters.

Deshalb liegt der vorliegenden Erfindung die Aufgabe zugrunde, eine Möglichkeit anzugeben, wie eine hohe Messgenauigkeit von Sensoren, die Schwinggabeln umfassen, auf einfache Art und Weise gewährleistbar ist.

Die der Erfindung zugrunde liegende Aufgabe wird gelöst durch ein Verfahren mit den Merkmalen des ersten Anspruchs.

Bei dem Symmetrierungs-Anregesignal handelt es sich insbesondere um ein periodisches und/oder harmonisches, insbesondere elektrisches, Signal. Beispielsweise kann eine resonante Schwingung für jeden der beiden Schwingelemente angeregt werden. Vorzugsweise wird für die beiden Schwingelemente dasselbe Symmetrierungs-Anregesignal verwendet.

Mittels der einstellbaren Impedanzelemente lässt sich ein vorgebbarer Wert für eine Impedanz der piezoelektrischen Elemente einstellen. Die Steifigkeit piezoelektrischer Elemente hängt grundsätzlich davon ab, wie gut elektrische Ladungen innerhalb des piezoelektrischen Elements abfließen können und damit einhergehend von der Impedanz einer nachfolgenden elektronischen Stufe. Umso schlechter elektrische Ladungen abfließen können, umso größer ist die Steifigkeit. Mittels der einstellbaren Impedanz kann somit die Steifigkeit des jeweiligen piezoelektrischen Elements und damit das Schwingverhalten des jeweiligen Schwingelements gezielt beeinflusst werden. Eine Anpassung der Schwingungsverhalten der beiden Schwingelemente, also eine Symmetrierung der beiden Schwingelemente, erfolgt demnach vorteilhaft anhand der Einstellung der Impedanz. Es müssen keine mechanischen Änderungen an den Schwingelementen selbst vorgenommen werden. Dieses Vorgehen erlaubt es somit, hoch präzise und mit geringem Aufwand, eine Schwinggabel zu symmetrieren und somit die Messgenauigkeit des jeweiligen Sensors erheblich zu verbessern.

In einer Ausgestaltung handelt es sich bei zumindest einem Impedanzelement um einen einstellbaren Widerstand, insbesondere ein Potentiometer, oder um einen Switched-Capacitor-Filter.

Eine Ausgestaltung sieht vor, dass die Elektronik dazu ausgestaltet ist, die Impedanz der Impedanzelemente, insbesondere in Abhängigkeit von einer Frequenz, Güte und/oder Amplitude des Empfangssignals, einzustellen.

Es ist von Vorteil, wenn die Impedanzelemente derart eingestellt werden, dass die erste und zweite Frequenz, Amplitude und/oder Güte jeweils den gleichen Wert aufweisen.

Vorzugsweise kann eine Symmetrierung im Rahmen des Herstellungsprozesses des Sensors, und/oder vor Inbetriebnahme des Sensors im jeweils angedachten Prozess, beispielsweise am Betriebsort des Sensors, erfolgen.

Die Erfindung wird anhand der nachfolgenden Figuren näher erläutert. Es zeigt:
Fig. 1: eine schematische Skizze eines vibronischen Sensors gemäß Stand der Technik,
Fig. 2 mehrere mögliche an sich aus dem Stand der Technik bekannte Ausgestaltungen einer Sensoreinheit, welche zur Durchführung des erfindungsgemäßen Verfahrens geeignet sind, und
Fig. 3 eine beispielhafte Ausgestaltung einer Vorrichtung mit zwei einstellbaren Impedanzelementen.

In den Figuren sind gleiche Elemente jeweils mit demselben Bezugszeichen versehen.

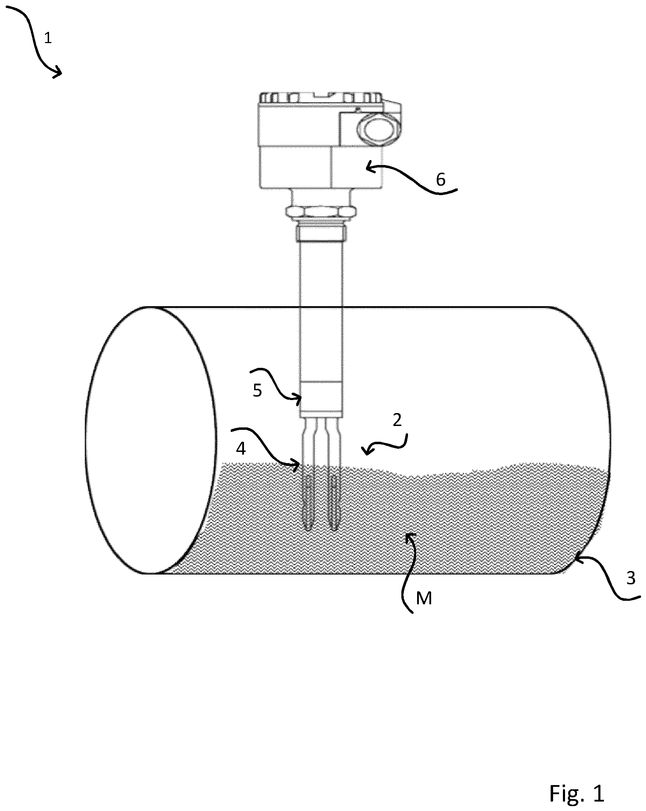

In Fig. 1 ist ein vibronischer Sensor 1 mit einer Sensoreinheit 2 gezeigt. Der Sensor verfügt über eine mechanisch schwingfähige Einheit 4 in Form einer Schwinggabel, welche teilweise in ein Medium M eintaucht, welches sich in einem Behälter 3 befindet. Die schwingfähige Einheit 4 wird mittels der Anrege-/Empfangseinheit 5 zu mechanischen Schwingungen angeregt, und kann beispielsweise durch einen piezoelektrischen Stapel- oder Bimorphantrieb sein. Andere vibronische Sensoren verfügen beispielsweise über elektromagnetische Antriebs-/Empfangseinheiten 5. Es ist sowohl möglich, eine einzige Antriebs-/Empfangseinheit 5 zu verwenden, welche zur Anregung der mechanischen Schwingungen sowie zu deren Detektion dient. Ebenso ist es aber denkbar, je eine Antriebseinheit und eine Empfangseinheit zu realisieren. Dargestellt ist in Fig. 1 ferner eine Elektronikeinheit 6, mittels welcher die Signalerfassung, -auswertung und/oder-speisung erfolgt.

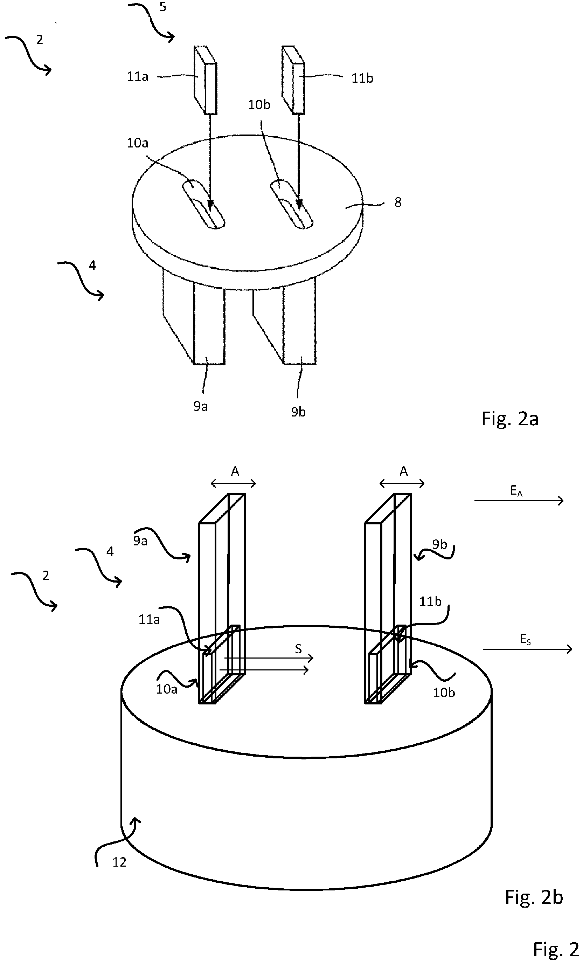

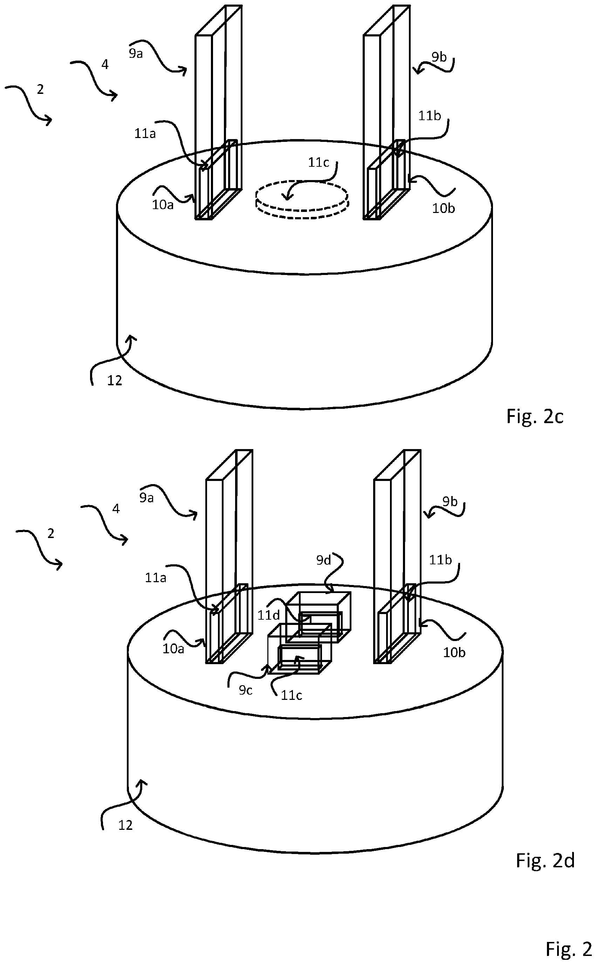

In Fig. 2 sind beispielhaft verschiedene Sensoreinheiten 2 gezeigt, welche sich zur Durchführung eines erfindungsgemäßen Verfahrens eignen.

Die in Fig. 2a gezeigte mechanisch schwingfähige Einheit 4 umfasst zwei an einer Basis 8 angebrachte Schwingelemente 9a, 9b, welche mithin auch als Gabelzinken bezeichnet werden. Optional kann an den Endseiten der beiden Schwingelemente 9a, 9b außerdem jeweils ein Paddel angeformt sein [hier nicht gezeigt]. In jedem der beiden Schwingelemente 9a, 9b ist jeweils ein, insbesondere taschenartiger, Hohlraum 10a, 10b eingebracht, in welchem jeweils zumindest ein piezoelektrisches Element 11a, 11b der Antriebs-/Empfangseinheit 5 angeordnet ist. Vorzugsweise sind die piezoelektrischen Elemente 11a und 11b innerhalb der Hohlräume 10a und 10b vergossen. Die Hohlräume 10a, 10b können dabei so beschaffen sein, dass sich die beiden piezoelektrischen Elemente 11a, 11b vollständig oder teilweise im Bereich der beiden Schwingelemente 9a, 9b befinden. Eine solche sowie ähnliche Anordnungen sind in der DE 10 2012 100 728 A1 ausführlich beschrieben.

Eine weitere beispielhafte, mögliche Ausgestaltung einer Sensoreinheit 2 ist in Fig. 2b dargestellt. Die mechanisch schwingfähige Einheit 4 verfügt über zwei parallel zueinander ausgerichtete, hier stabförmig ausgestaltete, auf einem scheibenförmigen Element 12 angebrachte, Schwingelemente 9a, 9b, welche getrennt voneinander zu mechanischen Schwingungen anregbar sind, und bei denen die Schwingungen ebenfalls getrennt voneinander empfangen und ausgewertet werden können. Beide Schwingelemente 9a und 9b weisen jeweils einen Hohlraum 10a und 10b auf, in welchen im dem scheibenförmigen Element 12 zugewandten Bereich jeweils zumindest ein piezoelektrisches Element 11a und 11b angeordnet ist. Bezüglich der Ausgestaltung gemäß Fig. 2b sei wiederum ferner auf in die bisher unveröffentlichte deutsche Patentanmeldung mit dem Aktenzeichen DE 10 2017 130 527 A1 verwiesen.

Wie in Fig. 2b schematisch eingezeichnet, wird erfindungsgemäß die Sensoreinheit 2 einerseits mit einem Anregesignal A beaufschlagt, derart, dass die schwingfähige Einheit 4 zu mechanischen Schwingungen angeregt wird. Die Schwingungen werden dabei vermittels der beiden piezoelektrischen Elemente 11a und 11b erzeugt. Es ist sowohl denkbar, dass beide piezoelektrischen Elemente mit demselben Anregesignal A beaufschlagt werden, als auch eine Beaufschlagung des ersten Schwingelements 11a mittels eines ersten Anregesignals A₁ und des zweiten Schwingelements 11b mittels eines zweiten Anregesignals A₂. Ebenso ist es sowohl denkbar, dass anhand der mechanischen Schwingungen ein erstes Empfangssignal E_{A}, oder von jedem Schwingelement 9a, 9b ein separates Empfangssignal E_{A1} bzw. E_{A2} empfangen wird.

Darüber hinaus wird vom ersten piezoelektrischen Element 11a ausgehend ein Sendesignal S ausgesendet, welches von dem zweiten piezoelektrischen Element 11b in Form eines zweiten Empfangssignals Es empfangen wird. Da die beiden piezoelektrischen Elemente 11a und 11b zumindest im Bereich der Schwingelemente 9a und 9b angeordnet sind, durchläuft das Sendesignal S das Medium M, sofern die Sensoreinheit 2 mit dem Medium M in Kontakt ist, und wird entsprechend von den Eigenschaften des Mediums M beeinflusst. Vorzugsweise handelt es sich bei dem Sendesignal S um ein, insbesondere gepulstes, Ultraschallsignal, insbesondere um zumindest einen Ultraschallpuls. Ebenso ist es denkbar, dass das Sendesignal S von dem ersten piezoelektrischen Element 11a im Bereich des ersten Schwingelements 9a ausgesendet wird und an dem zweiten Schwingelement 9b reflektiert wird. In diesem Falle wird das zweite Empfangssignal Es vom ersten piezoelektrischen Element 11a empfangen. Das Sendesignal S durchläuft in diesem Falle das Medium M zweimal, was zu einer Verdoppelung einer Laufzeit τ des Sendesignals S führt.

Eine weitere, beispielhafte Möglichkeit ist in Fig. 2c dargestellt. Hier ist ein drittes piezoelektrisches Element 11c im Bereich der Membran 12 vorgesehen. Das dritte piezoelektrische Element 11c dient der Erzeugung des Anregesignals A und zum Empfangen des ersten Empfangssignals E₁; das erste 11a und zweite piezoelektrische Element 11b dienen der Erzeugung des Sendesignals S bzw. dem Empfangen des zweiten Empfangssignals E₂. Alternativ ist es beispielsweise möglich, mit dem ersten 11a und/oder zweiten piezoelektrischen Element 11b das Anregesignal A und das Sendesignal S zu erzeugen sowie das zweite Empfangssignal E₂ zu empfangen, wobei das dritte piezoelektrische Element 11c zum Empfangen des ersten Empfangssignals E₁ dient. Ebenso ist es möglich, mit dem ersten 11a und/oder zweiten piezoelektrischen Element 11b das Sendesignal S und mit dem dritten piezoelektrischen Element 11c das Anregesignal A zu erzeugen und mit dem ersten 11a und/oder zweiten piezoelektrischen Element 11b das erste E₁ und/oder zweite Empfangssignal E₂ zu empfangen.

Noch eine mögliche Ausgestaltung der Vorrichtung 1 ist Gegenstand von Fig. 2d. Die Vorrichtung umfasst ausgehend von der Ausgestaltung aus Fig. 2b ein drittes 9c und ein viertes Schwingelement 9d. Diese dienen jedoch nicht einer Schwingungserzeugung. Vielmehr ist in den zusätzlichen Elemente 9c, 9d jeweils ein drittes 11c und viertes piezoelektrisches Element 11d angeordnet. In diesem Falle wird die vibronische Messung mittels der ersten beiden piezoelektrischen Elemente 11a, 11b und die Ultraschallmessung mittels der anderen beiden piezoelektrischen Elemente 11c, 11d durchgeführt.

In den gezeigten Ausgestaltungen dienen die piezoelektrischen Elemente 11 jeweils auch zur Schwingungsanregung und -detektion und haben damit eine Doppelfunktion. In anderen Ausgestaltungen kann auch zumindest ein in zumindest einem der Schwingelemente 9 angeordnetes piezoelektrisches Element 11 ausschließlich der Symmetrierung der Schwinggabel dienen, während es sich bei der elektromechanischen Wandlereinheit 5 um eine separate Komponente handelt. Vorzugsweise ist das zumindest eine piezoelektrische Element 11, welches zumindest teilweise in einem der Schwingelemente 9 angeordnet ist, in einem Bereich angeordnet, welcher die Steifigkeit des jeweiligen Schwingelements maßgeblich beeinflusst, beispielsweise im Wurzelbereich, also in einem an der Membran 8 oder dem scheibenförmigen Element 12 befestigten Endbereich des Schwingelements 9.

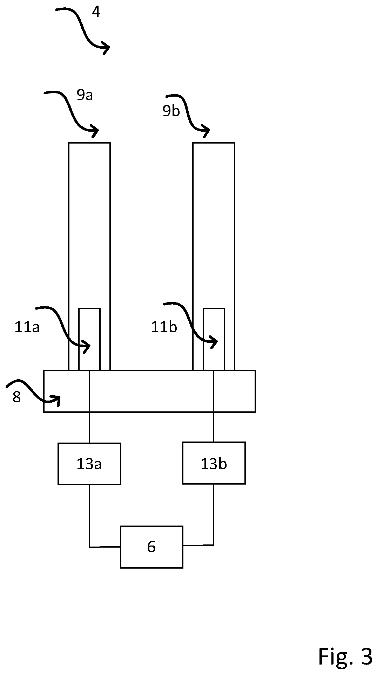

Eine beispielhafte Ausgestaltung einer Vorrichtung 1, bei welcher die mechanisch schwingfähige Einheit 4 ähnlich wie diejenige aus Fig. 2a ausgestaltet ist, ist in Fig. 3 gezeigt. Die Elektronik 6 umfasst neben verschiedenen in dem Kästchen mit dem Referenzsymbol 6 zusammengefassten Komponenten zwei elektrisch einstellbare Impedanzelemente 13a, 13b, welche jeweils in Reihe zu den beiden piezoelektrischen Elementen 11a, 11b geschaltet sind.

Mittels der Impedanzelemente 13a, 13b kann die Steifigkeit der Schwingelemente 9a, 9b direkt beeinflusst werden. Dadurch kann wiederum ein gleichartiges Schwingungsverhalten der beiden Schwingstäbe 9a, 9b, also eine Symmetrie zwischen beiden Schwingelementen 9a, 9b erreicht werden. Die Impedanz/Impedanzen kann/können sowohl im Rahmen des Herstellungsprozesses, vor der Inbetriebnahme am Einsatzort oder auch im fortlaufenden Betrieb passend eingestellt werden.

### Bezugszeichenliste

- 1: Vibronischer Sensor
- 2: Sensoreinheit
- 3: Behälter
- 4: Schwingfähige Einheit
- 5: Antriebs-/Empfangseinheit
- 6: Elektronikeinheit
- 8: Basis
- 9a, 9b: Schwingelemente
- 10a, 10b: Hohlräume
- 11a, 11b: piezoelektrische Elemente
- 12: scheibenförmiges Element
- 13, 13a, 13b: Impedanzelement

- M: Medium
- P₁-P₃: Prozessgrößen
- A: Anregesignal
- S: Sendesignal
- E_{A}: erstes Empfangssignal
- Es: zweites Empfangssignal
- ΔΦ: vorgebbare Phasenverschiebung
- ρ: Dichte des Mediums
- v: Viskosität des Mediums
- V_{M}: Schallgeschwindigkeit im Medium
- τ: Laufzeit

## Patentansprüche

1. Verfahren zur Symmetrierung von einem ersten Schwingelement (9a) und einem zweiten Schwingelement (9b) einer Schwinggabel, welche Teil einer Sensoreinheit einer Vorrichtung (1) zur Bestimmung und/oder Überwachung zumindest einer Prozessgröße (P) eines Mediums (M) ist,
wobei ein erstes piezoelektrisches Element (11a) zumindest teilweise in dem ersten Schwingelement (9a) angeordnet ist,
**dadurch gekennzeichnet, dass** die Sensoreinheit (2) zumindest zwei piezoelektrische Elemente (11a, 11b) umfasst,
wobei ein zweites piezoelektrisches Element (11b) zumindest teilweise in dem zweiten Schwingelement (9b) angeordnet ist,
wobei eine Elektronik (6) der Vorrichtung (1) zumindest ein erstes einstellbares Impedanzelement (13a) umfasst, welches in Reihe zu dem ersten piezoelektrischen Element (11a) geschaltet ist,
wobei die Elektronik (6) ein zweites Impedanzelement (13b) aufweist, welches in Reihe zu dem zweiten piezoelektrischen Element (11b) geschaltet ist,
und
wobei das Verfahren folgende Verfahrensschritte umfasst:
Anregen des ersten Schwingelements (9a) zu mechanischen Schwingungen mittels eines Symmetrierungs-Anregesignals,
Empfangen eines ersten Symmetrierungs-Empfangssignals,
Anregen des zweiten Schwingelements (9b) zu mechanischen Schwingungen mittels des Symmetrierungs-Anregesignals,
Empfangen eines zweiten Symmetrierungs-Empfangssignals,
Vergleichen des ersten und zweiten Symmetrierungs-Empfangssignals und
Einstellen des ersten Impedanzelements (13a) und des zweiten Impedanzelements (13b) anhand des Vergleichs,
wobei jeweils ein Schwingelement (9a,9b) mechanisch blockiert wird, während das jeweils andere Schwingelement (9a,9b) zu Schwingungen angeregt wird.

2. Verfahren nach Anspruch 1,
wobei das erste und das zweite Symmetrierungs-Empfangssignal anhand einer aus dem ersten und/oder zweiten Symmetrierungs-Empfangssignal ermittelten ersten bzw. zweiten Frequenz, Amplitude und/oder Güte miteinander verglichen werden, und
wobei die Impedanzelemente (13a, 13b) derart eingestellt werden, dass die erste und zweite Frequenz, Amplitude und/oder Güte jeweils den gleichen Wert aufweisen.

## Claims

1. Method for balancing a first oscillating element (9a) and a second oscillating element (9b)
second oscillating element (9b) of an oscillating fork, which is part of a sensor unit of a device (1) for determining and/or monitoring at least one process variable (P) of a medium (M),
wherein the sensor unit (2) comprises at least two piezoelectric elements (11a, 11b), wherein a first piezoelectric element (11a) is at least partially arranged in the first piezoelectric element (11a),
wherein a second piezoelectric element (11b) is arranged at least partially in the second oscillating element (9b),
wherein an electronic system (6) of the device (1) has at least a first adjustable impedance element (13a), which is connected in series with the first piezoelectric element (11a),
the electronic system (6) having a second impedance element (13b) which is connected in series with the second piezoelectric element (11b),
and
wherein the method comprises the following method steps:
Excitation of the first oscillating element (9a) to mechanical oscillations by means of a balancing excitation signal,
Receive a first balancing receive signal,
Excitation of the second oscillating element (9b) to mechanical oscillations by means of the balancing excitation signal,
Receive a second balancing receive signal,
Comparing the first and second balancing receive signals and adjusting the first impedance element (13a) and the second impedance element (13b) based on the comparison,
whereby one oscillating element (9a, 9b) is mechanically blocked, while the other oscillating element (9a, 9b) is excited to oscillate.

2. Method according to claim 1,
whereby the first and second symmetrization receive signals are determined by means of a
first and/or second frequency, amplitude and/or quality determined from the first and/or second balancing receive signal are compared with each other, and
wherein the impedance elements (13a, 13b) are set in such a way that the first and second frequency, amplitude and/or quality have the same value in each case.

## Revendications

1. Procédé de symétrisation d'un premier élément vibrant (9a) et d'une
deuxième élément vibrant (9b) d'une fourche vibrante, qui fait partie d'une unité de détection d'un dispositif (1) pour déterminer et/ou surveiller au moins une grandeur de processus (P) d'un milieu (M),
dans lequel l'unité de capteur (2) comprend au moins deux éléments piézoélectriques (11a, 11b),
dans lequel un premier élément piézoélectrique (11a) est disposé au moins partiellement dans le premier élément vibrant (9a),
dans lequel un deuxième élément piézoélectrique (11b) est disposé au moins partiellement dans le deuxième élément vibrant (9b),
dans lequel une électronique (6) du dispositif (1) comprend au moins un premier élément d'impédance (13a) qui est connecté en série avec le premier élément piézoélectrique (11a),
dans lequel l'électronique (6) comprend un deuxième élément d'impédance (13b) qui est connecté en série avec le deuxième élément piézoélectrique (11b),
et
le procédé comprenant les étapes de procédé suivantes :
l'excitation du premier élément vibrant (9a) en vibrations mécaniques au moyen d'un signal d'excitation de symétrisation,
Réception d'un premier signal de réception de symétrisation,
excitation du deuxième élément vibrant (9b) en vibrations mécaniques au moyen de du signal d'excitation de symétrisation,
Réception d'un deuxième signal de réception de symétrisation,
comparer les premier et deuxième signaux de réception de symétrisation et ajuster le premier élément d'impédance (13a) et le deuxième élément d'impédance (13b) sur la base de la comparaison,
dans lequel un élément oscillant (9a, 9b) étant bloqué mécaniquement, tandis que l'autre élément oscillant (9b) est excité pour vibrer.

2. Procédé selon la revendication 1,
dans lequel les premier et deuxième signaux de réception de symétrisation sont calculés à partir d'une formule choisie parmi les formules suivantes
de la première et/ou de la deuxième fréquence, de l'amplitude et/ou du facteur de qualité déterminés par le premier et/ou le deuxième signal de réception de symétrisation, et
dans lequel les éléments d'impédance (13a, 13b) sont réglés de telle sorte que les première et deuxième fréquences, amplitudes et/ou qualités présentent chacune la même valeur.
